# EUROPÄISCHE PATENTSCHRIFT

(11) **EP 3 736 187 B1**
(45) Veröffentlichungstag und Bekanntmachung des Hinweises auf die Patenterteilung: **14.12.2022**
(21) Anmeldenummer: 20168822.3
(22) Anmeldetag: 08.04.2020
(51) Int. Cl.: B60T 7/04, B60T 13/66, B60T 13/74, B60T 8/32

(54) **VERFAHREN ZUR STEUERUNG EINES ELEKTROMECHANISCHEN BREMSSYSTEMS SOWIE ELEKTROMECHANISCHES BREMSSYSTEM**
METHOD FOR CONTROLLING AN ELECTROMECHANICAL BRAKE SYSTEM AND ELECTROMECHANICAL BRAKE SYSTEM
PROCÉDÉ DE COMMANDE D'UN SYSTÈME DE FREINAGE ÉLECTROMÉCANIQUE ET SYSTÈME DE FREINAGE ÉLECTROMÉCANIQUE

(30) Priorität: 08.05.2019 DE 102019206612
(43) Veröffentlichungstag der Anmeldung: 11.11.2020
(73) Patentinhaber: Volkswagen Aktiengesellschaft, 38440 Wolfsburg (DE)
(72) Erfinder: Schmalbruch, Michael, 38302 Wolfenbüttel (DE); Szawlowski, Adrian, 10587 Berlin (DE)

(56) Entgegenhaltungen:
- DE-A1-102016 210 369
- DE-T5-112015 001 384

## Beschreibung

Die Erfindung betrifft ein Verfahren zum Betreiben eines elektromechanischen Bremssystems für ein Kraftfahrzeug sowie ein elektromechanisches Bremssystem mit einem solchen Bremskraftverstärker gemäß dem Oberbegriff der unabhängigen Patentansprüche.

In der Kraftfahrzeugtechnik sind elektromechanische Bremssysteme bekannt, welche eine immer größere Verbreitung finden. Solche Bremssysteme umfassen oftmals eine Pedalentkopplungseinheit, welche einem Hauptbremszylinder vorgeschaltet ist, wodurch eine Bremspedalbetätigung durch den Fahrer in der Betriebsart "Brake-by-wire" zu keiner direkten Betätigung des Hauptbremszylinders durch den Fahrer führt. Der Hauptbremszylinder wird stattdessen in der Betriebsart "Brake-by-wire" durch eine elektrisch steuerbare Druckbereitstellungseinrichtung betätigt, also "fremd"-betätigt. Um dem Fahrer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremssystemen kann die Bremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der DE 10 2016 210 369 A1 ist ein elektromechanischer Bremskraftverstärker mit einer Druckstange bekannt, welche ein Bremspedal eines Kraftfahrzeuges mit einem Hauptbremszylinder verbindet. Der elektromagnetische Bremskraftverstärker umfasst ferner einen Getriebemotor, welcher mit der Druckstange gekoppelt ist, und eine Steuereinrichtung zur Ansteuerung des Getriebemotors. Die Steuereinrichtung erhält als Eingangsgrößen die Pedalkraft und die Bewegung der Druckstange. Dabei ist die Steuereinrichtung derart konfiguriert, dass aus der Druckstangenbewegung eine Sollrückstellgröße für die Druckstange bestimmt wird. Dabei wird aus der Sollrücklaufgeschwindigkeit, einer Istrücklaufgeschwindigkeit und der Pedalkraft ein Ansteuersignal für den Getriebemotor generiert.

Die DE 10 2017 205 209 A1 offenbart ein Verfahren zur Kompensierung einer zu geringen Aktuatordynamik bei einem elektromechanischen Bremssystem. Dabei wird ein mechanisches Ist-Bremsmoment mittels eines Modells des Bremsaktuators prädiziert und in Abhängigkeit von dem prädizierten mechanischen Ist-Bremsmoment durch Ansteuern einer weiteren Fahrzeugkomponente ein Kompensationsmoment erzeugt, durch welches eine Regelabweichung, die sich beim Einregeln des mechanischen ist-Bremsmoments auf das Soll-Bremsmoment ergibt, ausgeglichen wird.

Aus der DE 10 2011 076 423 A1 ist ein Verfahren zur Regelung eines elektrohydraulischen Bremssystems für ein Kraftfahrzeug bekannt, welches vorzugsweise in einer "Brake-by-wire"-Betriebsart ansteuerbar ist. Das Bremssystem umfasst eine elektronische Steuer- und Regeleinheit, über welche eine Druckbereitstellungseinrichtung mit einer Zylinder-Kolben-Anordnung ansteuerbar ist, wobei der Kolben durch einen elektromechanischen Aktuator betätigbar ist. Um die Druckbereitstellungseinrichtung vor Beschädigungen zu schützen, ist vorgesehen, dass ein Druck-Sollwert bei einem Stillstand des Kraftfahrzeuges oder einem Übergang des Fahrzeuges in einen Stillstand auf einen vorbestimmten Druck-Maximalwert begrenzt wird.

Die DE 11 2015 001 384 T5 offenbart ein hydraulisches Bremssystem, welches in der Lage ist, eine zu starke oder zu geringe Hydraulikkraft zu verhindern und somit den Bremsdruck innerhalb eines Druckbereichs zu regeln. Ferner ist aus der DE 11 2015 001 384 T5 eine Steuereinrichtung bekannt, mit welcher der Bremsdruck in einem solchen hydraulischen Bremssystem entsprechend geregelt werden kann. Das Bremssystem umfasst ein Druckerhöhungsventil und ein Druckverringerungsventil, welche durch die Steuereinrichtung zur Druckregelung entsprechend angesteuert werden können.

Bei elektromechanischen Bremskraftverstärkern gibt es die Möglichkeit, die Verstärkung der Pedalkraft beim Bremsen mittels softwaretechnischer Applikation und abhängig von verschiedenen Messwerten, wie Geschwindigkeit und Druck, zu beeinflussen. Daraus resultiert die Gefahr, dass sich bei großen Sprüngen in der applizierten Kennlinie die Sollgröße für die Verstärkung und damit die für den Fahrer spürbare Verstärkung der Pedalkraft plötzlich und stark ändert. Darauf kann der Fahrer nicht hinreichend schnell reagieren, was zu einem gefährlichen Unterbremsen oder Überbremsen führen kann.

Der Erfindung liegt nun die Aufgabe zugrunde, bei einem elektromechanischen Bremssystem die Änderung der Bremskraftunterstützung durch einen elektromechanischen Bremskraftverstärker zu begrenzen, um für den Fahrer unkontrollierbare Fahrsituationen zu vermeiden.

Erfindungsgemäß wird diese Aufgabe durch ein Verfahren zur Steuerung eines elektromechanischen Bremssystem mit einem Bremspedal, einem mit dem Bremspedal in Wirkverbindung stehenden Hauptbremszylinder sowie mit einem elektromechanischen Bremskraftverstärker gelöst. Dabei umfasst der elektromechanische Bremskraftverstärker einen Aktuatormotor, welcher eine Pedalkraft auf das Bremspedal erhöht. Das Verfahren umfasst folgende Schritte: Ermitteln einer Sollgröße für die Bremskraftverstärkung und einer Ist-Größe für die Bremskraftverstärkung, wobei eine Änderung der Sollgröße der Bremskraftverstärkung bestimmt wird und mit einem Schwellenwert für die Änderung der Bremskraftverstärkung verglichen wird, wobei bei einer Überschreitung des Schwellenwertes die Änderung der Unterstützungskraft durch den elektromechanischen Bremskraftverstärker limitiert wird. Mit Hilfe der Gradientenlimitierung soll die Auswirkung der oben beschriebenen Sprünge in der Unterstützungskraft für den Fahrer beherrschbar werden. Dabei ändert sich die für den Fahrer spürbare Verstärkung der Bremskraftunterstützung nur in einem beherrschbaren Rahmen, jede darüber hinausgehende Änderung wird durch das vorgeschlagene Verfahren begrenzt, so dass unkontrollierte Fahrzustände vermieden werden. Durch die Gradientenlimitierung der Bremskraftunterstützung kann der Fahrer sein Fahrverhalten allmählich anpassen, so dass keine sicherheitskritischen Fahrsituationen entstehen. Am Ende der Gradientenlimitierung ist eine Basisverstärkung erreicht, die nicht mehr unterschritten werden kann.

Durch die in den abhängigen Ansprüchen aufgeführten Merkmale sind vorteilhafte Verbesserungen und nicht-triviale Weiterentwicklungen des im unabhängigen Anspruch angegebenen Verfahrens zur Steuerung eines elektromechanischen Bremssystems möglich.

Erfindungsgemäß ist vorgesehen, dass zusätzlich eine absolute Änderung der Sollgröße für die Bremskraftverstärkung ermittelt wird, wobei die absolute Änderung mit einem weiteren Schwellenwert verglichen wird und bei einer absoluten Änderung, welcher kleiner als der weitere Schwellenwert ist, kein Eingriff in die Änderung der Unterstützungskraft durch den elektromechanischen Bremskraftverstärker erfolgt. Ist der Offset kleiner als ein vom System als zulässiger Offset angesehener Sprung in der Bremskraftunterstützung, so erfolgt kein Eingriff und die Änderung der Bremskraftunterstützung wird planmäßig umgesetzt. Dadurch wird erreicht, dass eine entsprechend schnelle Änderung der Unterstützungskraft ermöglicht wird, um die Bremskraft hinreichend schnell zu erhöhen oder zu reduzieren, um insbesondere blockierende Räder zu vermeiden.

Besonders bevorzugt ist dabei, wenn bei einer absoluten Änderung der Sollgröße für die Bremskraftverstärkung, welche größer als der weitere Schwellenwert ist, eine Begrenzung der Änderung der Unterstützungskraft erfolgt. Sieht die Kennlinie einen größeren Sprung in der Änderung der Bremskraftunterstützung vor, so wird dieser Sprung durch die Gradientenlimitierung begrenzt und die Änderung zeitlich verlangsamt, so dass der Fahrer sein Verhalten an die Änderung anpassen kann und es nicht zu unkontrollierbaren Fahrsituationen kommt.

In einer vorteilhaften Ausführungsform des Verfahrens ist vorgesehen, dass bei einer mehrfachen Änderung der Sollgröße für die Bremskraftverstärkung ein Glättungsfilter verwendet wird. Durch einen Glättungsfilter können bei einer geplanten mehrfachen Änderung der Unterstützungskraft entsprechende Ausschläge vermieden werden, wodurch die Änderung der Unterstützungskraft für den Fahrer leichter beherrschbar wird, was den Fahrkomfort steigert.

Besonders vorteilhaft ist dabei, wenn der Glättungsfilter eine erste Filterkonstante für die Erhöhung der Bremskraftunterstützung und eine zweite Filterkonstante für die Reduzierung der Bremskraftunterstützung aufweist. Folgen in der Kennlinie in kurzer zeitlicher Reihenfolge ein Sprung in Richtung höhere Bremskraftunterstützung und ein darauffolgender Sprung in Richtung geringere Bremskraftunterstützung, so können beide Sprünge durch die Filter entsprechend geglättet werden, so dass die Anpassung der Bremskraftunterstützung harmonischer und für den Fahrer leichter zu beherrschen erfolgt.

In einer vorteilhaften Ausgestaltung des Verfahrens ist vorgesehen, dass eine Reduzierung der Unterstützungskraft des elektromechanischen Bremskraftverstärkers begrenzt wird. Um insbesondere eine starke Abnahme in der Unterstützungskraft zu vermeiden und dem Fahrer nicht das Gefühl zu vermitteln, dass der elektromechanische Bremskraftverstärker plötzlich ausgefallen ist, wird eine Reduzierung der Unterstützungskraft begrenzt. Dadurch kann der Fahrer die Pedalkraft leicht und sicher zu beherrschen an die Unterstützungskraft anpassen, so dass keine kritischen Fahrzustände auftreten.

Alternativ oder zusätzlich ist vorgesehen, dass eine Erhöhung der Unterstützungskraft des elektromechanischen Bremskraftverstärkers begrenzt wird. Um ein Überbremsen zu vermeiden, ist mit Vorteil vorgesehen, dass eine Erhöhung der Unterstützungskraft ebenfalls begrenzt ist, um zu verhindern, dass das Fahrzeug ohne Befehl des Fahrers unerwartet stark verzögert. Dieser Fahrzustand ist insbesondere bei Fahrbahnen mit niedrigem Reibwert kritisch, da eine unkontrollierte Erhöhung der Unterstützungskraft zu einem Blockieren der Räder führen kann. Bei Fahrbahnen mit hohem Reibwert zwischen den Reifen und der Fahrbahn führt dies zu einer entsprechend starken Verzögerung, welche insbesondere für den nachfolgenden Verkehr zu gefährlichen Fahrsituationen führen kann.

Erfindungsgemäß wird ein elektromechanisches Bremssystem mit einem Bremspedal, einem mit dem Bremspedal in Wirkverbindung stehenden Hauptbremszylinder sowie mit einem elektromechanischen Bremskraftverstärker vorgeschlagen. Dabei ist vorgesehen, dass der elektromechanische Bremskraftverstärker einen Aktuatormotor umfasst, welcher eine Pedalkraft auf das Bremspedal erhöht. Das elektromechanische Bremssystem umfasst ferner eine Steuergerät, auf welchem ein maschinenlesbarer Programmcode abgelegt ist, wobei ein erfindungsgemäßes Verfahren durchgeführt wird, wenn der maschinenlesbare Programmcode durch das Steuergerät ausgeführt wird. Durch ein erfindungsgemäßes elektromechanisches Bremssystem kann die Anpassung der Bremskraftunterstützung derart begrenzt werden, dass für den Fahrer schwer zu beherrschende Fahrsituationen betriebssicher vermieden werden. Dabei kann insbesondere auch die Auswirkung von Fehlern in der Applikation begrenzt werden, so dass selbst bei Applikationsfehlern in der Kennlinie der Bremskraftunterstützung stets ein sicheres Beherrschen des Kraftfahrzeuges gewährleistet ist.

In einer vorteilhaften Ausführungsform des elektromechanischen Bremssystems ist vorgesehen, dass der elektromechanische Bremskraftverstärker einen Aktuatormotor, ein mit dem Aktuatormotor in Wirkverbindung stehendes Unterstützungsgetriebe sowie einen Pedalkraftsensor aufweist. Durch ein Unterstützungsgetriebe und einen Pedalkraftsensor kann die ausgeübte Pedalkraft mit der applizierten Unterstützungskraft abgeglichen werden, wodurch die Anpassung der Unterstützungskraft erleichtert wird.

In einer weiteren Verbesserung der Erfindung ist vorgesehen, dass das Steuergerät über eine Signalleitung mit dem Aktuatormotor des elektromechanischen Bremskraftverstärkers verbunden ist, wobei zur Begrenzung der Änderung der Unterstützungskraft eine Änderung in der Bestromung des Aktuatormotors limitiert wird. Durch die Limitierung in der Änderung der Bestromung des Aktuatormotors können Sprünge in der Kennlinie auf einfache Art und Weise begrenzt werden, so dass ein plötzlicher starker Anstieg oder Abfall in der Unterstützungskraft unterbunden wird.

Die Erfindung wird nachfolgend in Ausführungsbeispielen anhand der zugehörigen Zeichnungen erläutert. Es zeigen:
- Figur 1: ein elektromechanisches Bremssystem mit einem Bremspedal, einem elektromechanischen Bremskraftverstärker und einem Hauptbremszylinder zur Durchführung eines erfindungsgemäßen Verfahrens zur Steuerung des Bremssystems;.
- Figur 2: ein Ablaufdiagramm zur Durchführung eines erfindungsgemäßen Verfahrens zur Steuerung eines elektromechanischen Bremssystems;
- Figur 3: den Verlauf der Sollgröße für die Bremskraftverstärkung über der Zeit bei einem kleinen Sprung in der Kennlinie;
- Figur 4: den Verlauf der Sollgröße für die Bremskraftverstärkung über der Zeit bei einem großen Sprung in der Kennlinie und
- Figur 5: den Verlauf der Sollgröße für die Bremskraftverstärkung über der Zeit bei mehreren aufeinanderfolgenden Sprüngen in der Kennlinie.

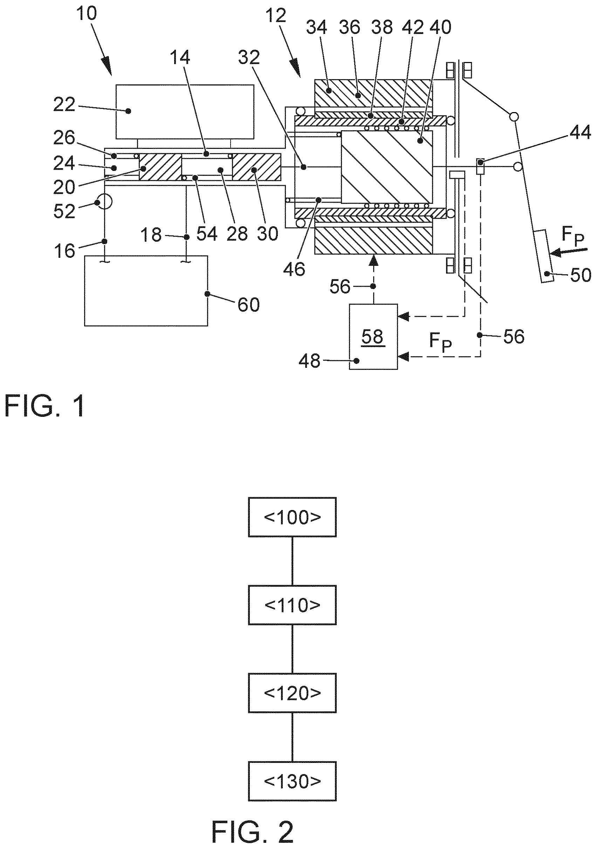

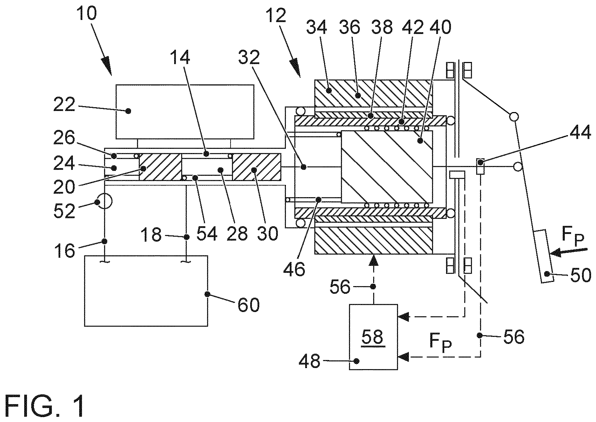

Figur 1 zeigt eine elektromechanisches Bremssystem 10 für ein Kraftfahrzeug. Das elektromechanische Bremssystem 10 umfasst ein Bremspedal 50, einen elektromechanischen Bremskraftverstärker 12 sowie einen Hauptbremszylinder 14. Der Hauptbremszylinder 14 ist als Tandem-Zylinder mit einem ersten Druckraum 24 und einem zweiten Druckraum 28 ausgeführt, welche durch einen verschiebbaren Schwimmkolben 20 getrennt sind. Der Hauptbremszylinder 14 ist mit einer ESP-Hydraulikeinheit 60 verbunden, über welche die Radbremsen der einzelnen Fahrzeugräder angesteuert werden können.

Der Hauptbremszylinder 14 ist über zwei Bremskreise 16, 18 mit der Hydraulikeinheit 60 verbunden. Die beiden Bremskreise 16, 18 werden über einen ersten, durch eine erste Rückstellfeder 26 abgestützten Schwimmkolben 20 sowie durch einen zweiten, durch eine weitere Rückstellfeder 54 abgestützten Druckkolben 30 angesteuert. Dabei wirken die beiden Bremskreise 16, 18 jeweils auf zwei diagonal zueinander angeordneten Radbremsen des Kraftfahrzeuges, um bei einem Ausfall eines Bremskreises 16, 18 ein kontrollierbares Anhalten des Kraftfahrzeuges zu ermöglichen. Die erste Rückstellfeder 26 dient dazu, den Schwimmkolben 20 zurückzudrücken, damit Bremsflüssigkeit aus einem Druckreservoir 22 in den ersten Druckraum 24 des Hauptbremszylinders 14 nachströmen kann. Bei einer Leckage im zweiten hydraulischen Bremskreis 18 dient die weitere Rückstellfeder 54 dazu, den Schwimmkolben 20 vom Druckkolben 30 zu separieren, so dass Bremsflüssigkeit aus dem Druckreservoir 22 in den zweiten Druckraum 28 zwischen dem Schwimmkolben 20 und dem Druckkolben 30 strömen kann. Die Rückstellfedern 26, 54 sind so ausgelegt, dass sie diese Rückstellung beider Kolben 20, 30 in allen Betriebssituationen des elektromechanischen Bremssystems 10 erfüllen können.

Der elektromechanische Bremskraftverstärker 12 weist eine Druckstange 32 auf, welche das Bremspedal 50 mit dem Hauptbremszylinders 14 verbindet. Diese Verbindung ist vorzugsweise derart ausgeführt, dass zwischen dem Hauptbremszylinder 14 und dem Bremspedal 50 sowohl Druck- als auch Zugkräfte übertragen werden können. Dabei steht die Druckstange 32 mit dem Druckkolben 30 des Hauptbremszylinders 14 in Wirkverbindung, um einen hydraulischen Druckaufbau in den beiden Bremskreisen 16, 18 zu ermöglichen. Der elektromechanische Bremskraftverstärker 12 umfasst ferner einen Aktuatormotor 34, welcher mit der Druckstange 32 gekoppelt ist. Der Aktuatormotor 34 kann insbesondere als bürstenloser elektrischer Getriebemotor ausgeführt sein. Der Aktuatormotor 34 umfasst einen Stator 36 und einen Rotor 38, die konzentrisch um die Druckstange 32 angeordnet sind. Ein ebenfalls koaxial zur Druckstange 32 angeordneter Spindeltrieb des Aktuatormotors 34 umfasst eine drehfest gelagerte, jedoch axial bewegliche Spindelschraube 40, welche mit der Druckstange 32 fest verbunden ist. Die Spindelschraube 40 kämmt über Kugeln mit einer Kugelgewindemutter 42, welche über den Rotor 38 des Aktuatormotors 34 angetrieben ist.

Bei einer Aktivierung des Aktuatormotors 34 wird die Kugelgewindemutter 42 in Drehung versetzt, um je nach Drehrichtung an der Spindelschraube 40 und damit an der Druckstange 32 eine positive oder negative Kraft in axialer Richtung der Druckstange 32 zu erzeugen. Unter einer positiven Kraft wird eine Kraft verstanden, welche in die gleiche Richtung wie eine vom Fahrer bei einer Betätigung des Bremspedals 50 ausgeübte Pedalkraft Fp gerichtet ist. Unter einer negativen Kraft ist eine Kraft zu verstehen, welcher der Pedalkraft Fp des Fahrers entgegenwirkt und somit die auf das Bremspedal 50 ausgeübte Pedalkraft F_{P} reduziert.

In einem Verstärkungsbetrieb wird die Druckstage 32 infolge der Pedalkraft F_{P} sowie einer durch den Aktuatormotor 34 bereitgestellten positiven Unterstützungskraft Fs in Richtung des Hauptbremszylinders 14 verschoben. Dabei wird die vom Fahrer aufgebrachte Pedalkraft F_{P} mittels eines Pedalkraftsensors 44 an der Druckstange 32 erfasst. Alternativ oder zusätzlich kann hierzu auch der vom Hauptbremszylinder 14 erzeugt Druck mittels eines Drucksensors 52 erfasst werden. In Abhängigkeit von der erfassten Kraft wird der Stator 36 des Aktuatormotors 34 bestromt. Dadurch beginnt der Rotor 38 des Aktuatormotors 34 sich zu drehen. Über die mit dem Rotor 38 drehfest verbundene oder einstückig mit dem Rotor 38 ausgeführte Kugelgewindemutter 42 und die Kugeln des Kugelspindeltriebs bewegen sich die Spindelschraube 40 sowie die Druckstange 32 translatorisch in Richtung des Hauptbremszylinders 14. Die Spindelschraube 40 ist dazu rotationsfest, jedoch frei in der Translationsbewegung, gelagert.

Sollte der elektromechanische Bremskraftverstärker 12 ausfallen, so kann der Fahrer mit seiner auf des Bremspedal 50 ausgeübten Pedalkraft das Bremssystem 10 ohne Unterstützungskraft F_{S} betätigen. Um nach einer Bremsbetätigung den Bremsdruck auf Null zu reduzieren, kann der Antrieb des elektromechanischen Bremskraftverstärkers 12 selbsthemmungsfrei ausgebildet sein. Insbesondere kann dieser so ausgelegt sein, dass durch den hydraulischen Gegendruck, das Federsystem 26, 54 des Hauptbremszylinders 14 sowie eine gegebenenfalls vorhandene Pedalrückholfeder 46 im elektromechanischen Bremskraftverstärker 12 eine ausreichende Rückstellkraft aufgebaut wird, welche den elektromechanischen Bremskraftverstärker 12 sowie das Bremspedal 50 in ihre jeweiligen Ausgangsstellungen zurückfährt.

Das elektromechanische Bremssystem 10 umfasst ferner ein Steuergerät 48, welches über Signalleitungen 56 mit dem Aktuatormotor 34 sowie dem Drucksensor 52 und dem Pedalkraftsensor 44 verbunden ist. Das Steuergerät 48 weist einen Speicher auf, in welchem ein Programmcode 58 zur Durchführung eines erfindungsgemäßen Verfahrens zur Steuerung des elektromechanischen Bremssystems 10 abgelegt ist.

In Figur 2 ist ein Ablaufdiagramm zur Durchführung eines erfindungsgemäßen Verfahrens zur Steuerung eines elektromechanischen Bremssystems 10 dargestellt. In einem ersten Verfahrensschritt <100> wird die Pedalkraft F_{P} des Fahrers auf das Bremspedal 50 erfasst. In einem zweiten Verfahrensschritt <110> wird diese Pedalkraft F_{P} durch den elektromechanischen Bremskraftverstärker 12 erhöht oder verringert, wobei in einem Verfahrensschritt <120> eine Änderung der Bremskraftverstärkung ermittelt wird und mit einem Schwellenwert für die Änderung verglichen wird, wobei bei einer Überschreitung des Schwellenwertes in einem Verfahrensschritt <130> eine Änderung der Unterstützungskraft Fs durch den elektromechanischen Bremskraftverstärker 12 limitiert wird.

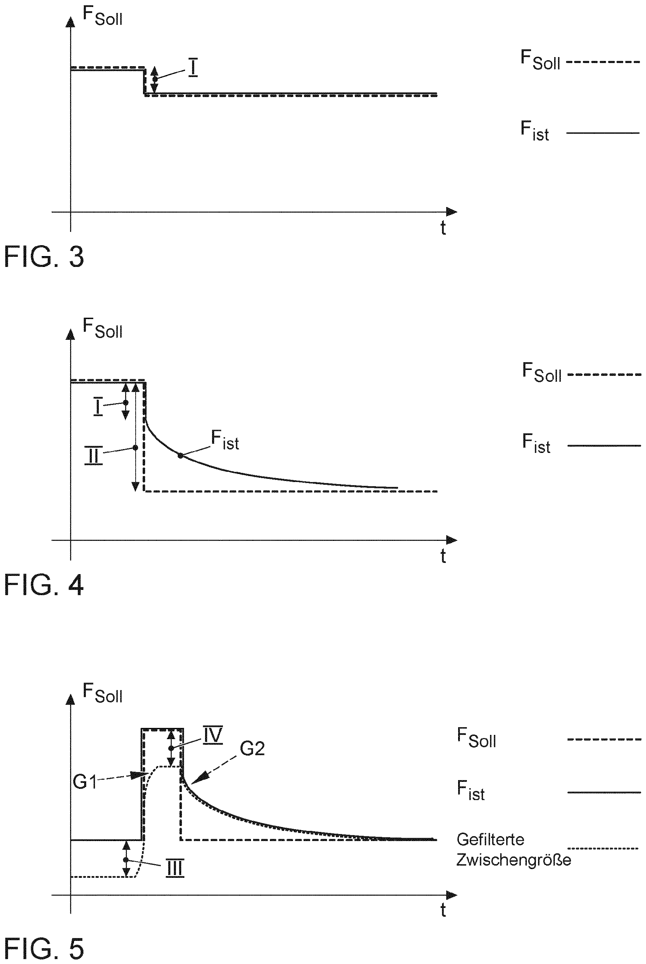

In Figur 3 ist der zeitliche Verlauf der Sollgröße F_{Soll} (gestrichelte Linie) für die Bremskraftverstärkung und die daraus resultierende Ausgangsgröße F_{Ist} (durchgezogene Linie) für die Bremskraftverstärkung dargestellt. Dabei erfolgt, wie in Figur 3 dargestellt, bei einem kleinen Sprung I in der Sollkennlinie keine Anpassung, die Sollgröße F_{Soll} wird als ungefiltert als Ausgangsgröße F_{Ist} weitergegeben.

In Figur 4 ist der zeitliche Verlauf der Sollgröße F_{Soll} für die Bremskraftverstärkung bei einem großen Sprung II in der Kennlinie für die Sollbremskraftverstärkung dargestellt. Dabei wird die Sollgröße F_{Soll} durch die Gradientenlimitierung entsprechend gefiltert und eine unkritische Ausgangsgröße F_{IST} für die Änderung der Bremskraftunterstützung ausgegeben, welche für einen Fahrer eines Kraftfahrzeuges als beherrschbar eingestuft wird.

In Figur 5 ist eine Kennlinie für die Sollgröße F_{Soll} der Bremskraftverstärkung mit mehreren Sprüngen III, IV dargestellt. Dabei wird der vom Fahrer beherrschbare Verlust an Bremskraftunterstützung durch zwei Filterkonstanten G1 und G2 limitiert, wodurch die Änderungen in der Ausgangsgröße F_{IST} deutlich geringer ausfallen als die Änderungen in der Sollgröße F_{Soll} und somit für einen Fahrer eines Kraftfahrzeuges deutlich leichter zu beherrschen sind.

### Bezugszeichenliste

- 10: elektromechanisches Bremssystem
- 12: elektromechanischer Bremskraftverstärker
- 14: Hauptbremszylinder
- 16: erster Bremskreis
- 18: zweiter Bremskreis

- 20: Schwimmkolben
- 22: Druckreservoir
- 24: erster Druckraum
- 26: Rückstellfeder
- 28: zweiter Druckraum

- 30: Kolben
- 32: Druckstange
- 34: Aktuatormotor
- 36: Stator
- 38: Rotor

- 40: Spindelschraube
- 42: Kugelgewindemutter
- 44: Pedalkraftsensor
- 46: Rückholfeder
- 48: Steuergerät

- 50: Bremspedal
- 52: Drucksensor
- 54: Rückstellfeder
- 56: Signalleitung
- 58: Programmcode

- 60: ESP-Hydraulikeinheit
- Fs: Verstärkungskraft
- F_{Soll}: Sollgröße für die Bremskraftverstärkung
- F_{IST}: Ist-Größe für die Bremskraftverstärkung
- F_{P}: Pedalkraft

- G1: erste Filterkonstante des Glättungsfilters
- G2: zweite Filterkonstante des Glättungsfilters
- I: kleiner Sprung
- II: großer Sprung
- III, IV: mehrere Sprünge

- <100>: erster Schritt - Erfassung der Pedalkraft F_{P} des Fahrers auf das Bremspedal 50
- <110>: zweiter Schritt - Erhöhung oder Verringerung der Pedalkraft Fp durch den elektromechanischen Bremskraftverstärker 12
- <120>: dritter Schritt - Ermittlung einer Änderung in der Bremskraftverstärkung und Vergleich mit einem Schwellenwert für die Änderung
- <130>: vierter Schritt - bei Überschreitung des Schwellenwertes Limitierung einer Änderung der Unterstützungskraft Fs durch den elektromechanischen Bremskraftverstärker 12

## Patentansprüche

1. Verfahren zur Steuerung eines elektromechanischen Bremssystems (10) mit einem Bremspedal (50), einem mit dem Bremspedal (50) in Wirkverbindung stehenden Hauptbremszylinder (14) sowie mit einem elektromechanischen Bremskraftverstärker (12), wobei der elektromechanische Bremskraftverstärker (12) einen Aktuatormotor (34) umfasst, welcher eine Pedalkraft (F_{P}) auf das Bremspedal (50) erhöht oder verringert, wobei eine Sollgröße (Fₛₒₗₗ) für die Bremskraftverstärkung und eine Ist-Größe (F_{Ist}) für die Bremskraftverstärkung ermittelt werden, **dadurch gekennzeichnet, dass** eine Änderung der Soll-Größe (Fₛₒₗₗ) der Bremskraftverstärkung bestimmt wird und mit einem Schwellenwert für die Änderung der Bremskraftverstärkung (F_{S}) verglichen wird, wobei bei Überschreiten des Schwellenwertes die Änderung der Unterstützungskraft (F_{S}) durch den elektromechanischen Bremskraftverstärker (12) limitiert wird, wobei zusätzlich eine absolute Änderung der Sollgröße (F_{Soll}) für die Bremskraftverstärkung ermittelt wird, wobei die absolute Änderung mit einem weiteren Schwellenwert verglichen wird und bei einer absoluten Änderung, welche kleiner als der weitere Schwellenwert ist, kein Eingriff in die Änderung der Unterstützungskraft (F_{S}) durch den elektromechanischen Bremskraftverstärker (12) erfolgt.

2. Verfahren zur Steuerung eines elektromechanischen Bremssystems (10) nach Anspruch 1, **dadurch gekennzeichnet, dass** bei einer absoluten Änderung der Sollgröße (F_{Soll}) für die Bremskraftverstärkung, welche größer als der weitere Schwellenwert ist, eine Begrenzung der Änderung der Unterstützungskraft (F_{S}) erfolgt.

3. Verfahren zur Steuerung eines elektromechanischen Bremssystems (10) nach einem der Ansprüche 1 oder 2, **dadurch gekennzeichnet, dass** bei einer mehrfachen Änderung der Sollgröße (F_{Soll}) für die Bremskraftverstärkung ein Glättungsfilter verwendet wird.

4. Verfahren zur Steuerung eines elektromechanischen Bremssystems (10) nach Anspruch 3, **dadurch gekennzeichnet, dass** der Glättungsfilter eine erste Filterkonstante (G1) für die Erhöhung der Bremskraftunterstützung und eine zweite Filterkonstante (G2) für die Reduzierung der Bremskraftunterstützung aufweist.

5. Verfahren zur Steuerung eines elektromechanischen Bremssystems (10) nach einem der Ansprüche 1 bis 4, **dadurch gekennzeichnet, dass** die Reduzierung der Unterstützungskraft (F_{S}) des elektromechanischen Bremskraftverstärkers (12) begrenzt wird.

6. Verfahren zur Steuerung eines elektromechanischen Bremssystems (10) nach einem der Ansprüche 1 bis 5, **dadurch gekennzeichnet, dass** eine Erhöhung der Unterstützungskraft (F_{S}) des elektromechanischen Bremskraftverstärkers (12) begrenzt wird.

7. Elektromechanisches Bremssystem (10) mit einem Bremspedal (50), einem mit dem Bremspedal (50) in Wirkverbindung stehenden Hauptbremszylinder (14) sowie mit einem elektromechanischen Bremskraftverstärker (12), wobei der elektromechanische Bremskraftverstärker (12) einen Aktuatormotor (34) umfasst, welcher eine Pedalkraft (F_{P}) auf das Bremspedal (50) erhöht, sowie mit einem Steuergerät (48), welches dazu eingerichtet ist, ein Verfahren nach einem der Ansprüche 1 bis 6 durchzuführen, wenn ein maschinenlesbarer Programmcode (58) durch das Steuergerät (48) ausgeführt wird.

8. Elektromechanisches Bremssystem (10) nach Anspruch 7, **dadurch gekennzeichnet, dass** der elektromechanische Bremskraftverstärker (12) einen Aktuatormotor (34), ein mit dem Aktuatormotor (34) in Wirkverbindung stehendes Unterstützungsgetriebe (40, 42) sowie einen Pedalkraftsensor (44) aufweist.

9. Elektromechanisches Bremssystem (10) nach Anspruch 7 oder 8, **dadurch gekennzeichnet, dass** das Steuergerät (48) über eine Signalleitung (56) mit dem Aktuatormotor (34) des elektromechanischen Bremskraftverstärkers (12) verbunden ist, wobei zur Begrenzung der Änderung der Unterstützungskraft (F_{S}) eine Änderung in der Bestromung des Aktuatormotors (34) limitiert wird.

## Claims

1. Method for controlling an electromechanical brake system (10) comprising a brake pedal (50), a brake master cylinder (14) operatively connected to the brake pedal (50) and comprising an electromechanical brake booster (12), wherein the electromechanical brake booster (12) comprises an actuator motor (34), which increases or reduces a pedal force (Fₚ) on the brake pedal (50), wherein a target variable (Fₛₒₗₗ) for the brake boost and an actual variable (Fᵢₛₜ) for the brake boost are determined, **characterized in that** a change in the target variable (Fₛₒₗₗ) of the brake boost is determined and is compared with a threshold value for the change in the brake boost (Fₛ), wherein, if the threshold value is exceeded, the change in the assistance force (Fₛ) is limited by the electromechanical brake booster (12), wherein, in addition, an absolute change in the target variable (Fₛₒₗₗ) for the brake boost is determined, wherein the absolute change is compared with a further threshold value and, in the event of an absolute change which is lower than the further threshold value, no intervention is made in the changing of the assistance force (Fₛ) by the electromechanical brake booster (12).

2. Method for controlling an electromechanical brake system (10) according to Claim 1, **characterized in that**, in the event of an absolute change in the target variable (Fₛₒₗₗ) for the brake boost which is higher than the further threshold value, the change in the assistance force (Fₛ) is limited.

3. Method for controlling an electromechanical brake system (10) according to either of Claims 1 and 2, **characterized in that** a smoothing filter is used in the event of a multiple change in the target variable (Fₛₒₗₗ) for the brake boost.

4. Method for controlling an electromechanical brake system (10) according to Claim 3, **characterized in that** the smoothing filter has a first filter constant (G1) for the increase in the braking assistance and a second filter constant (G2) for the reduction in the braking assistance.

5. Method for controlling an electromechanical brake system (10) according to one of Claims 1 to 4, **characterized in that** the reduction in the assistance force (Fₛ) of the electromechanical brake booster (12) is limited.

6. Method for controlling an electromechanical brake system (10) according to one of Claims 1 to 5, **characterized in that** an increase in the assistance force (Fₛ) of the electromechanical brake booster (12) is limited.

7. Electromechanical brake system (10) comprising a brake pedal (50), a brake master cylinder (14) operatively connected to the brake pedal (50) and comprising an electromechanical brake booster (12), wherein the electromechanical brake booster (12) comprises an actuator motor (34), which increases a pedal force (Fₚ) on the brake pedal (50), and comprising a control device (48), which is set up to carry out a method according to one of Claims 1 to 6 when a machine-readable program code (58) is executed by the control device (48).

8. Electromechanical brake system (10) according to Claim 7, **characterized in that** the electromechanical brake booster (12) has an actuator motor (34), an assistance gearbox (40, 42) operatively connected to the actuator motor (34), and a pedal force sensor (44).

9. Electromechanical brake system (10) according to Claim 7 or 8, **characterized in that** the control device (48) is connected to the actuator motor (34) of the electromechanical brake booster (12) via a signal line (56), wherein, in order to limit the change in the assistance force (Fₛ), a change in the current feed to the actuator motor (34) is limited.

## Revendications

1. Procédé de commande d'un système de freinage électromécanique (10) avec une pédale de frein (50), avec un maître-cylindre de frein (14) placé en liaison active avec la pédale de frein (50) ainsi qu'avec un amplificateur de force de freinage (12) électromécanique, l'amplificateur de force de freinage (12) électromécanique comprenant un moteur d'actionneur (34) qui augmente ou diminue une force de pédale (FP) sur la pédale de frein (50), une grandeur théorique (F_{Soll}) étant calculée pour le renforcement de la force de freinage et une grandeur réelle (F_{Ist}) étant calculée pour le renforcement de la force de freinage, **caractérisé en ce qu'**une variation de la grandeur théorique (F_{Soll}) du renforcement de la force de freinage est définie et est comparée à une valeur seuil pour la variation du renforcement de la force de freinage (Fₛ), la variation de la force d'assistance (Fₛ) étant limitée par l'amplificateur de force de freinage (12) électromécanique en cas de dépassement de la valeur seuil, une variation absolue de la grandeur théorique (F_{Soll}) étant en outre calculée pour le renforcement de la force de freinage, la variation absolue étant comparée à une autre valeur seuil et en cas de variation absolue inférieure à l'autre valeur seuil, aucune intervention n'était réalisée dans la variation de la force d'assistance (Fₛ) par le biais de l'amplificateur de force de freinage électromécanique (12).

2. Procédé de commande d'un système de freinage électromécanique (10) selon la revendication 1, **caractérisé en ce qu'**en cas de variation absolue de la grandeur théorique (F_{Soll}) pour le renforcement de la force de freinage supérieure à l'autre valeur seuil, il y a une limitation de la variation de la force d'assistance (Fₛ).

3. Procédé de commande d'un système de freinage électromécanique (10) selon l'une quelconque des revendications 1 ou 2, **caractérisé en ce qu'**en cas de variation multiple de la grandeur théorique (F_{Soll}), un filtre lissant est utilisé pour le renforcement de la force de freinage.

4. Procédé de commande d'un système de freinage électromécanique (10) selon la revendication 3, **caractérisé en ce que** le filtre lissant présente une première constante de filtre (G1) pour l'augmentation des forces d'assistance et une deuxième constante de filtre (G2) pour la réduction des forces d'assistance.

5. Procédé de commande d'un système de freinage électromécanique (10) selon l'une quelconque des revendications 1 à 4, **caractérisé en ce que** la réduction de la force d'assistance (Fₛ) de l'amplificateur de force de freinage électromécanique (12) est limitée.

6. Procédé de commande d'un système de freinage électromécanique (10) selon l'une quelconque des revendications 1 à 5, **caractérisé en ce qu'**une augmentation de la force d'assistance (Fₛ) de l'amplificateur de force de freinage électromécanique (12) est limitée.

7. Système de freinage électromécanique (10) avec une pédale de frein (50), avec un maître-cylindre de frein (14) placé en liaison active avec la pédale de frein (50) ainsi qu'avec un amplificateur de force de freinage électromécanique (12), l'amplificateur de force de freinage électromécanique (12) comprenant un moteur d'actionneur (34) qui augmente une force de pédale (FP) s'exerçant sur la pédale de frein (50) ainsi qu'avec un appareil de commande (48) qui est conçu pour mettre en œuvre un procédé selon l'une quelconque des revendications 1 à 6 lorsqu'un code de programmation (58) lisible par machine est exécuté par l'appareil de commande (48).

8. Système de freinage électromécanique (10) selon la revendication 7, **caractérisé en ce que** l'amplificateur de force de freinage électromécanique (12) comporte un moteur d'actionneur (34), une boîte de vitesses assistée (40, 42) placée en liaison active avec le moteur d'actionneur (34) ainsi qu'un détecteur de force de pédale (44).

9. Système de freinage électromécanique (10) selon la revendication 7 ou 8, **caractérisé en ce que** l'appareil de commande (48) est relié au moteur d'actionneur (34) de l'amplificateur de force de freinage électromécanique (12) via un câble de transmission de signal (56), une variation étant limitée dans l'alimentation en courant du moteur d'actionneur (34) en vue de limiter la variation de la force d'assistance (Fₛ).
